# EUROPEAN PATENT APPLICATION

(11) **EP 0 806 714 A1**
(43) Date of publication of application: **12.11.1997**
(21) Application number: 97201256.1
(22) Date of filing: 25.04.1997
(51) Int. Cl.: G05B 19/10

(54) **A coded keyboard for a household appliance**

(30) Priority: 06.05.1996 IT MI960884
(71) Applicant: CANDY S.p.A., I-20052 Monza (Milano) (IT)
(72) Inventor: Fumagalli, Silvano, 20052 Monza (MI) (IT)
(74) Representative: Mittler, Enrico

(57) **Abstract**

A keyboard for a household appliance comprises, in a control panel (1) of the household appliance, at least one seat (2) suitable for receiving a key (3) of a set of interchangeable keys, said seat (2) comprising a plurality of open electrical contacts (C1-C4) that can also be closed selectively between a line of electrical input signal (41-43) common to all said contacts (C1-C4) and a respective plurality of lines of electrical output signal (O1-O4). Each key (3) of said set of interchangeable keys is provided with means for closing the electrical contacts (7, 9) to determine the closing of a respective combination of said plurality of contacts (C1-C4) so as to connect electrically said line of electrical input signal (41-43) to a respective combination of said lines of electrical output signal (O1-O4).

## Description

The present invention relates to a coded keyboard for a household appliance, preferably but not exclusively for a washing machine or a dishwasher.

Electronic washing machines and dishwashers are known commercially, that are equipped with an electronic microcontroller control unit which presides over the operation of the machine itself.

These machines can, as is known, execute a variety of washing programs, that can be selected by the user by means of setting timers.

The washing programs can also, to a certain extent provided for by the manufacturer, be customized, that is they can be varied in some of their steps: for example, it is possible to vary the quantity of washing liquid loaded by the machine in case of half a load, or it is possible to select the speed of spinning, or to provide for additional rinsing steps, and so on.

This type of customization of the washing programs is obtained by providing appropriate push-buttons on the control panel of the machines, which can be read by the microcontroller. Such push-buttons are called, in the jargon of the sector, "alterating push-buttons".

In the known machines, each alterating push-button performs a univocal function, in the sense that to an activation thereof there corresponds on the part of the microcontroller the execution of a sequence of instructions preestablished during the manufacturing step of the machine.

Since, however, markets of different countries can require different functions of alteration (or customization) of the washing programs, the manufacturer of household appliances is obliged to provide as many different versions of a same model of washing machine or dishwasher as there are different markets: in each version, to a given alterating push-button there will correspond a function other than the one associated with that same push-button in the other versions. This is for example done practically by providing different versions of firmware for the microcontroller, wherein the sequences of instructions associated with the activation of a given push-button are different one from the other. As an alternative, but in an even more costly manner, it is possible to provide different versions of the circuit board on which the alterating push-buttons are mounted.

Substantially, all this translates in an increase in the costs for the manufacturer.

In view of the state of the art described, the object of the present invention is that of providing a keyboard that allows the abovementioned problems to be solved.

According to the present invention, such object is attained by means of a keyboard for a household appliance characterized in that it comprises, in a control panel of the household appliance, at least one seat suitable for receiving a key of a set of interchangeable keys, said seat comprising a plurality of open electrical contacts that can also be closed selectively between a line of electrical input signal common to all said contacts and a respective plurality of lines of electrical output signal, each key of said set of interchangeable keys being provided with means for closing the electrical contacts to determine the closing of a respective combination of said plurality of contacts so as to connect electrically said line of electrical input signal to a respective combination of said lines of electrical output signal. In the keyboard according to the invention, each key does not have a univocal and invariable function: each key is associated with a certain code that can be decoded by a control unit of the household appliance in order to activate a certain function. By selecting the desired key within the set of available keys, it is possible to vary the code present on the lines of output signal of the keyboard, and thus to activate a different function of the household appliance. In this way, it is no longer necessary to provide several versions of the same household appliance, but only one version of the same with a set of keys each associated with a different code.

The features and the advantages of the present invention will be made more evident by the following detailed description of an embodiment thereof, illustrated purely as a non-limiting example in the enclosed drawings, wherein:
Fig. 1 shows in a diagrammatic manner a keyboard according to the present invention;
Fig. 2 shows in a diagrammatic manner a key of the keyboard of Fig. 1.

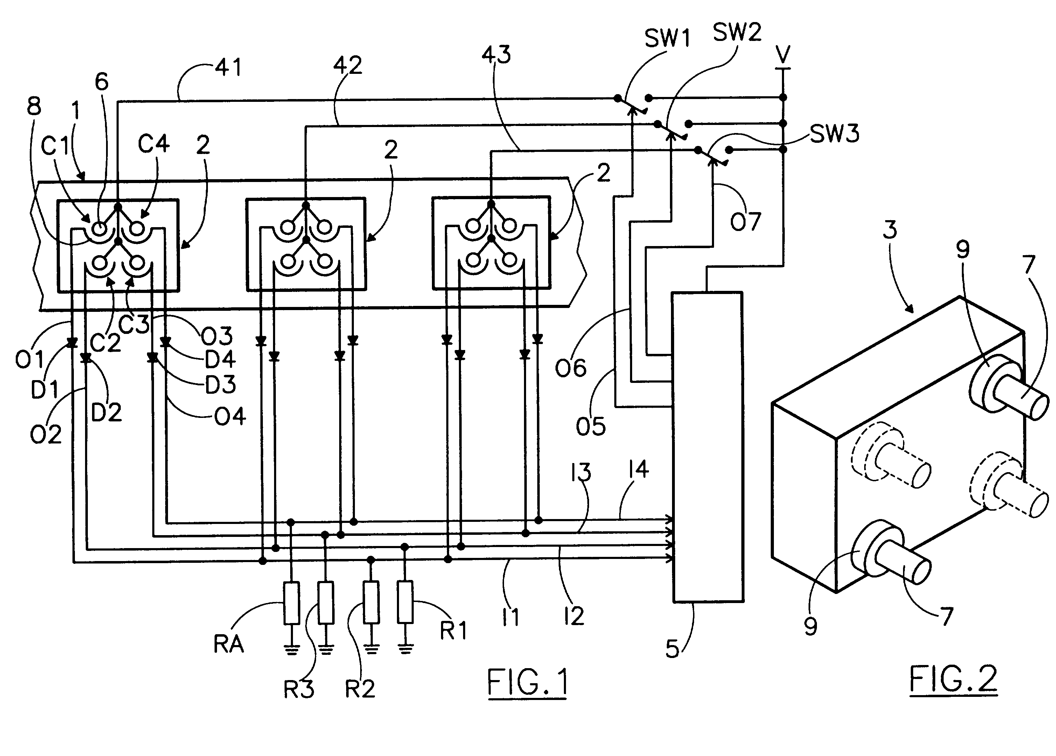

With reference to the drawings, and in particular to Fig. 1, there is there represented diagrammatically a control panel 1 of a household appliance, for example a washing machine or a dishwasher. Such control panel 1 is normally placed on the outside of the household appliance, in a position accessible by the user.

In the control panel 1 there are obtained seats 2 (three in the example shown) to receive a coding key 3 shown diagrammatically in Fig. 2, and that hereinafter will be simply called "key ".

Within each of the seats 2 there is obtained a set of normally open contacts C1-C4 between a respective common line 41-43 suitable for supplying a voltage V and four output lines O1-O4.

Each contact C1-C4 consists for example of an electrically conductive socket 6 suitable for receiving the end of a respective plug 7 (fig. 2) also electrically conductive that can be provided on the key 3 in a position so that when the key 3 is inserted in the respective seat 2 the plug 7 penetrates into the socket 6. The contact C1-C4 also comprises an end 8 of the respective output line O1-O4 arranged so as to circumscribe the socket 6 and that when the key 3 is inserted into the seat 2 gets to come into contact with a disc 9, also electrically conductive, placed at the base of the plug 7. In this way, when the key 3 is inserted into the seat 2, the contact C1-C4 can be closed determining the short-circuiting of the common line 41-43 with the respective output line O1-O4 associated with that particular contact.

The four output lines O1-O4 are respectively connected, by means of diodes D1-D4, to respective input lines I1-I4 of a microcontroller 5. The output lines of the contacts provided in the other seats 2 of the keyboard 1 are also connected, by means of respective diodes, to the respective lines I1-I4. The four input lines I1-I4 of the microcontroller 5 are moreover kept connected to a reference ground voltage by means of respective connecting elements R1-R4, typically resistors; in this way the input lines I1-I4 are prevented from assuming undetermined electrical potentials.

The microcontroller 5 in addition has three output lines O5-O7 that control respective switches SW1-SW3 suitable for selectively connecting the common lines 41-43 to the supply voltage.

In Fig. 2 there is diagrammatically shown a key 3 suitable for being inserted in one of the seats 2 of the keyboard 1 provided on the control panel of the washing machine or dishwasher. The key 3 has already been described in part. It is important to highlight here that it can comprise in general any number of plugs 7, 9 ranging from zero to four.

When the key 3 is inserted in one of the seats 2, in relation to the number and to the arrangement of the plugs 7, 9 provided in it, none or one or more of the contacts C1-C4 is closed, so that the common line 41-43 associated with the seat 2 of the keyboard 1 wherein the key 3 has been inserted can be selectively connected to a respective combination of the four output lines O1-O4.

When the microcontroller 5 has to read the position of one of the three keys of the keyboard 1, it first of all activates the output line O5-O7 associated with the key to be read, so that the respective switch SW1-SW3 closes and the common line 41-43 is supplied with the supply voltage V.

In relation to the number and to the position of the plugs 7, 9 provided on the key 3 inserted in the seat 2 of the keyboard that is being read, none or one or more of the output lines O1-O4 will be brought up to the voltage V, and thus none or one or more of the input lines I1-I4 of the microcontroller 5 will be brought up to the voltage V.

As appears obvious, for each key of the keyboard sixteen different configurations are possible for the potential of the input lines I1-I4: the lines I1-I4 will for example all be at the ground potential if the key 3 has no plug 7, 9; or, as in the example of Fig. 2, the lines I and I3 can be brought up to the voltage V, while the lines I2 and I4 will remain at the ground voltage.

These sixteen different configurations of the potential of the input lines can be decoded by the microcontroller 5, which operates on the basis of an appropriate firmware suitable for interrogating the keyboard periodically to read the position of the keys. On the basis of the particular code present on the input lines I1-I4 (configuration of the potential of the four input lines), the microcontroller 5 will activate one of sixteen different procedures for the customization of the functions of the household appliance.

In the same way the microcontroller reads the two other keys of the keyboard 1.

By providing the user with a set of sixteen keys 3, each with a specific arrangement of plugs 7, 9, or only a sub-set of the sixteen keys, the user himself can customize the washing programs of the washing machine or dishwasher according to his own requirements. The manufacturer is no longer obliged to manufacture as many versions of the same household appliance as there are countries wherein it is sold, it being simply necessary for the firmware of the microcontroller to contain a set of all the procedures that activate the different functions, which will be activated from time to time on the basis of the decoding of the state of the four lines I1-I4, that is of the particular key inserted by the user in the keyboard.

The keyboard according to the present invention can be provided not only on washing machines or dishwashers, but more in general on all household appliances: in this case, the keyboard will have functions other than those of "alterating" the standard operating programs; for example, with one of the configurations of the input lines of the microcontroller it will be possible to associate the function of "starting up" the household appliance, with another configuration of the input lines it will be possible to associate a function of "resetting", etc.

## Claims

1. A keyboard for a household appliance characterized in that it comprises, in a control panel (1) of the household appliance, at least one seat (2) suitable for receiving a key (3) of a set of interchangeable keys, said seat (2) comprising a plurality of open electrical contacts (C1-C4) that can also be closed selectively between a line of electrical input signal (41-43) common to all said contacts (C1-C4) and a respective plurality of lines of electrical output signal (O1-O4), each key (3) of said set of interchangeable keys being provided with means for closing the electrical contacts (7, 9) to determine the closing of a respective combination of said plurality of contacts (C1-C4) so as to connect electrically said line of electrical input signal (41-43) to a respective combination of said lines of electrical output signal (O1-O4).

2. A keyboard according to claim 1, characterized in that said line of electrical input signal (41-43) can be connected to a supply voltage (V).

3. A keyboard according to claim 2, characterized in that said household appliance comprises a control unit (5) supplied by said lines of output signal (O1-O4) of the keyboard to read the electrical potential associated with each of said output lines (O1-O4).

4. A keyboard according to claim 3, characterized in that said control unit (5) operates so as to activate, for each configuration of the electrical potential of said output lines (O1-O4) a respective operative procedure of the household appliance.

5. A keyboard according to claim 1, characterized in that it comprises a plurality of said seats (2), each having a respective line of electrical input signal (41-43) and a respective plurality of lines of electrical output signal (O1-O4) and being suitable for receiving a respective key (3) of a respective set of interchangeable keys, the lines of output signal (O1-O4) of the keyboard being associated with lines of input signal (I1-I4) of the control unit (5).

6. A keyboard according to claim 5, characterized in that the lines of electrical input signal (41-43) of the different seats (2) of the keyboard are selectively connected, by means of respective connecting means (SW1- SW3), to the supply voltage (V).

7. A keyboard according to claim 6, characterized in that said connecting means (SW1-SW3) are individually controlled by the control unit (5).

8. A keyboard according to any of the preceding claims, characterized in that said household appliance is a washing machine.

9. A keyboard according to any of the preceding claims from 1 to 7, characterized in that said household appliance is a dishwasher.
